# EUROPEAN PATENT APPLICATION

(11) **EP 4 679 030 A1**
(43) Date of publication of application: **14.01.2026**
(21) Application number: 24188126.7
(22) Date of filing: 11.07.2024
(51) Int. Cl.: G01B 21/04, G01B 5/012

(54) **A SCANNING PROBE AND METHOD**

(71) Applicant: Renishaw plc, Wotton-under-Edge, Gloucestershire GL12 8JR (GB)
(72) Inventor: The designation of the inventor has not yet been filed
(74) Representative: Dunn, Paul Edward

(57) **Abstract**

A scanning probe (4; 302) for a coordinate positioning apparatus (1) is described. The scanning probe (4;320 ) comprises a probe body (10) and a stylus holder (11) for holding a stylus (12; 304), the stylus holder (11) being deflectable relative to the probe body (10). One or more transducers (600) are also provided for producing one or more transducer signals indicative of stylus holder deflection, the one or more transducers (600) allowing measurement of stylus holder deflection relative to the probe body over a transducable deflection range. One or more digitisers (606) are also provided to digitise the one or more transducer signals and generate therefrom digitised probe data that describes stylus holder deflection. The scanning probe (4;302) is configurable to generate the digitised probe data for a subrange of the transducable deflection range. A method of setting a subrange of a transducable deflection range is also outlined. In this manner, the scanning probe (4;302) may be used for form and surface finish measurements.

## Description

The present invention relates to a scanning probe for use on coordinate positioning apparatus, such as a machine tool, and more particularly to a scanning probe that can be optimised for different object measurements.

A variety of measurement probes for use on machine tools are known. One example of such a measurement probe is a so-called scanning probe that outputs a stream of data describing the amount of stylus deflection that occurs as a stylus is scanned along a surface of an object. The output from such a scanning probe can be used, in combination with information from the machine tool that describes the position of the scanning probe relative to the object, to measure the position of multiple points along a scan path on the surface of the object. These measurements may be used for part setup and/or inspection purposes.

WO2002/061378 described a scanning probe configured for use in a machine tool environment. A capacitive transducer is used to measure (in three-dimensions) the deflection of a stylus holder from a rest position and a stream of three-dimensional stylus deflection data (so-called probe data) is output by the scanning probe whilst the stylus tip is moved (i.e. scanned) along the surface of the object being measured. Different styli, for example styli of different length or stiffness, may be attached to the stylus holder for measuring the form of different objects.

US2016/0231108 describes a machine tool scanning probe or insert that is adapted to include a double-cone stylus for measuring the surface finish of an object. In this example, an optical sensor is used to measure the magnitude, but not direction, of stylus deflection. WO2019/207293 and WO2019/207294 also describe surface finish styli for use on machine tool scanning probes, such as machine tool scanning probes of the type described in WO2002/061378.

WO2023/036887 describes a scanning probe having an arrangement of strain gauge sensors that is suitable for use on machine tool. The scanning probe can be configured to have a transduced stylus deflection range of up to around 1.8mm for a 100mm stylus, which is sufficient for scanning purposes. It is also mentioned in WO2023/036887 how such a scanning probe could be used for surface finish measurements by attachment of a suitable surface finish stylus.

As outlined above, the use of surface finish styli on machine tool scanning probes is known. However, the present inventors have appreciated that simply replacing the traditional (e.g., ruby ball) stylus that is used for form measurement with a surface finish stylus (e.g., a pin or disk) does not provide a scanning probe system that is optimised for taking surface finish measurements. In particular, the stylus tip deflections that occur during a surface finish scan are typically no more than tens of microns (rather than up to a few millimetres) so only make use of a relatively small part of the transduced deflection range of the scanning probe. This leads to noise on the deflection signal that can impact the quality of the collected surface finish measurements. It is noted that this is also the reason why surface finish measurements on dedicated CMMs or the like typically include a stylus having a transducer mounted near the stylus tip, for example as described in WO2018/150178.

According to a first aspect of the present invention, there is provided a scanning probe for a coordinate positioning apparatus, comprising;
a probe body,
a stylus holder for holding a stylus, the stylus holder being deflectable relative to the probe body,
one or more transducers for producing one or more transducer signals indicative of stylus holder deflection, the one or more transducers allowing measurement of stylus holder deflection relative to the probe body over a transducable deflection range, and
one or more digitisers for digitising the one or more transducer signals and generating therefrom digitised probe data that describes stylus holder deflection,
wherein the scanning probe is configurable to generate the digitised probe data for a subrange of the transducable deflection range.

The present invention thus relates to a scanning probe that is suitable for use on a coordinate positioning apparatus, such as a machine tool. The scanning probe comprises a probe body (e.g., that can be secured to the spindle of a machine tool) and a stylus holder that is movably mounted to the probe body. The stylus holder is mechanically able to deflect (move) relative to the probe body. The stylus holder is configured to retain a stylus. For example, the stylus holder may include an attachment mechanism (e.g., a threaded bore) that allows a stylus to be attached to (e.g., screwed onto) the stylus holder. A variety of different styli can thus be attached to the stylus holder of the scanning probe, depending on the measurement that is to be performed using the scanning probe.

One or more transducers are provided as part of the scanning probe that can measure deflection of the stylus holder (i.e., deflection of the stylus holder relative to the probe body) within a transducable deflection range. In other words, the transducable deflection range defines the range (limits) of stylus holder deflection that may be transduced (measured) by the one or more transducers. As explained below, additional (non-transduced) stylus holder deflection (i.e., outside of the transducable deflection range) may also be possible, for example as part of a break-out protection mechanism that prevents damage to the scanning probe in the case of excessive stylus deflection (so-called "over-deflection"). Examples of suitable transducer(s) are also outlined below, which include strain gauges, and capacitive or optical sensors. The one or more transducers produce one or more transducer signals that indicate (i.e., provide a measure of) stylus deflection. The transducer signals may comprise analogue signals, for example signals in which the voltage varies in relation to the amount of stylus deflection. In a preferred embodiment described below, multiple (e.g., three) transducers may be used to provide information on both the magnitude and direction of stylus deflection.

The scanning probe also comprises one or more digitisers that digitise the one or more transducer signals and generate digitised probe data that describes stylus holder deflection. As explained below, each digitiser may include an analogue-to-digital converter (ADC). In a preferred embodiment, each digitiser may include an amplifier and an ADC. Each transducer (voltage) signal may be suitably amplified before being applied to the input stage of the ADC for conversion into a digital output signal providing the digitised probe data.

The scanning probe of the present invention is configurable to generate the digitised probe data for a subrange of the transducable deflection range. In other words, the scanning probe can be configured so that the digitised probe data generated describes stylus holder deflection over only a part or portion (i.e., not all) of the transducable deflection range of the probe over which stylus holder deflection could be measured. This allows, for a given digitiser arrangement, the generation of digitised probe data that provides a finer measurement resolution, albeit only over a smaller subrange of stylus holder deflection. Consider, for example, a digitiser comprising a 16-bit ADC (i.e., an ADC that digitises a signal using 65,536 levels). Producing digitised probe data over only a 100µm subrange of stylus deflection would increase the measurement resolution of that probe data by an order of magnitude compared to the digitised probe data that would be produced using a stylus deflection range of 1mm (i.e. each ADC level would relate to a deflection of approximately 1.5nm instead of approximately 15nm). As explained below, various techniques can be implemented to digitise only a portion (i.e., a subrange) of the transducable deflection range.

The ability to configure the scanning probe to generate probe data over a subrange of stylus holder deflection has various advantages. In particular, it allows a scanning probe with a relatively large transducable range that is suitable for form measurements (e.g., to sense deflections of up to around 1.5mm for a 100mm long stylus) to also be configured for use with surface finish stylus where much lower stylus deflections occur during measurement. For example, it may be necessary to sense deflections of one millimetre or more for form measurement using a 100mm long stylus, whereas a similar length stylus for surface roughness measurement may only deflect by up to 50µm during measurement. Narrowing or focussing the digitised probe data to relate to the smaller (e.g., 50µm) subrange means that the measurement resolution of the digitised probe data can be greatly increased over that subrange of interest. For example, all the 65,536 levels of a 16-bit ADC could be used to describe deflection within the smaller (e.g., 50µm) subrange. The scanning probe can thus be optimised for different expected stylus deflections, for example based on the type of stylus that is attached to the scanning probe. The scanning probe could, of course, also be configured to generate digitised probe data over the whole transducable deflection range. In this manner, improved measurements of surface finish or the like can be obtained without removing the possibility of using such a scanning probe to also acquire form measurements.

Advantageously, the scanning probe is configured to enable the proportion of the transducable deflection range encompassed by the subrange to be adjusted. The scanning probe is thus configured so that the proportion of the transducable deflection range encompassed by the subrange is adjustable. In other words, the scanning probe can be configured to alter the amount (e.g. percentage) of the transducable deflection range that the subrange covers. This adjustment may be performed by a user of the scanning probe. In this manner, the scanning probe may be user-configurable to generate probe data describing stylus holder deflection within an adjustable sub-range (portion) of the transducable deflection range. The adjustment may comprise inputting a subrange value into the scanning probe. Such a value may be loaded into the scanning probe via a probe interface that communicates with, and optionally receives measurement data from, the scanning probe. Alternatively, the probe may include a user interface that allows such a value to be inputted directly (e.g., by setting DIP switches, or via a wireless link such as a Bluetooth or optical communications unit). In a preferred embodiment described below, the subrange may be adjusted by deflecting the stylus holder to minimum and/or maximum expected stylus deflection positions whilst the scanning probe is in a configuration mode.

Advantageously, the subrange comprises less than 75% of the transducable deflection range. More preferably, the subrange may comprise less than 50% of the transducable deflection range. More preferably, the subrange may comprise less than 25% of the transducable deflection range. More preferably, the subrange may comprise less than 10% of the transducable deflection range. It is also preferred that the resolution of the one or more digitisers remains unchanged when the subrange is adjusted (i.e., so the full resolution of the one or more digitisers are used over the selected subrange). It should also be noted that whilst the scanning probe can be configured to output digitised probe data over such a subrange, it may also be able to generate digitised probe data over the whole transducable deflection range (i.e., as per prior art scanning probes).

Conveniently, the scanning probe is configured to enable an upper boundary of the subrange to be adjusted. In other words, the upper end of the subrange is variable and can be set to different values. For example, a user may be able to adjust the upper boundary of the subrange. As explained below, this upper boundary may be set in a configuration step by deflecting the stylus holder to the maximum deflection that is expected to be used during the measurement that is to be performed. To provide some headroom, the upper boundary may be set slightly above (e.g., 10% above) the maximum stylus holder deflection applied in the configuration step. Alternatively, such headroom may be provided by deflecting the stylus holder by slightly more (e.g., by an extra 10%) than the maximum deflection that is likely to occur during measurement. Providing such headroom allows noise or stylus slippage effects etc to be taken into account. This arrangement thus allows the digitised probe data to relate only to stylus holder deflections up to the upper boundary of the subrange. In this manner, a maximum stylus holder deflection for which digitised probe data is generated can be set. It should be noted the stylus holder may still be physically deflected past this maximum, but digitised probe data describing the deflection is only generated for deflections below this maximum. The probe data may simply saturate above the upper boundary (e.g., the probe data may plateau at a maximum value) and/or an error condition may be indicated (e.g., to halt machine motion for crash protection purposes). For example, a stop or error signal may be generated if the stylus holder deflection exceeds the upper boundary. As explained below, using only a part of the transducable deflection range (e.g., up to the upper boundary) is beneficial because it allows the resolution or granularity of the digitised probe data to be increased over that reduced deflection range.

The lower end or boundary of the subrange may be the neutral position of the stylus holder (i.e., the position adopted by the stylus holder when holding a stylus but in the absence of an applied external force). The subrange may then extend from the undeflected stylus holder (neutral) location to the maximum stylus holder deflection mentioned above. Advantageously, the scanning probe is configured to enable a lower boundary of the subrange to be adjusted. In other words, the lower end of the subrange can be variable and set to different values. For example, a user may be able to adjust the lower boundary of the subrange. As explained below, this lower boundary may be set in a configuration step by deflecting the stylus holder to the minimum deflection that is expected to be used during the measurement process. Again, some headroom may be provided by setting the lower boundary to be slightly less (e.g., by 10%) than the minimum expected stylus holder deflection. This allows the digitised probe data to relate only to stylus holder deflections above this lower boundary of the subrange. In this manner, a minimum stylus holder deflection for which digitised probe data is generated can be set. It should be noted that the stylus holder may still move beyond this minimum deflection (e.g., to return to the neutral position), but digitised probe data describing the deflection is only generated for deflections above this minimum. The probe data may simply drop to zero below the lower boundary or an error condition may be indicated (e.g., to indicate contact with the surface has been lost or there is less deflection than expected). An error signal may be generated if the stylus holder deflection drops below the lower boundary. The ability to generate digitised probe data between upper and lower boundaries can further increase the measurement resolution provided over that reduced deflection range.

In a preferred embodiment, the scanning probe is operable in a configuration mode (i.e., a boundary setting mode or a boundary configuration mode). The configuration mode may allow the upper boundary and/or the lower boundary to be set after deflecting the stylus holder to a maximum and/or minimum deflection. For example, a user may deflect the stylus to a maximum deflection and then enter the configuration mode to set an upper boundary based on the maximum deflection. Similarly, a user may deflect the stylus to a minimum deflection and enter the configuration mode to set a lower boundary based on the minimum deflection. As explained above, the upper and lower boundaries that are set in the configuration mode may include appropriate headroom. Two discrete configuration modes (e.g., an upper boundary setting mode and a lower boundary setting mode) may be provided for setting the upper and lower boundaries.

Advantageously, the scanning probe is configured to enable the measurement resolution of the digitised probe data to be adjusted. In other words, the granularity or resolution with which deflections of the stylus holder are described by the digitised probe data can be adjusted. This translates into a corresponding change in the measurement resolution that can be acquired using a stylus of a certain length. Adjusting the measurement resolution of the digitised probe data may be accompanied by also adjusting the proportion of the transducable deflection range encompassed by the subrange, for example by altering the lower and/or upper boundaries of the subrange. In other words, the same resolution of digitisation (e.g., digitising with a 16-bit resolution) may be spread over a smaller part of the transducable deflection range thereby increasing the measurement resolution.

As explained below, there are various way to vary the measurement resolution whilst also adjusting the subrange. For example, adjusting the gain applied to the transducer signal(s) prior to be digitised by the digitiser(s), altering the signal used to drive the transducer(s) or providing different sets of digitisers configured to digitise different portions of the transducer signal(s). It would also be possible to increase the measurement resolution over the same subrange of stylus holder deflection by, for example, increasing the digitisation sampling rate (e.g., to oversample the one or more transducer signals). Although an increased digitisation sampling rate would likely be accompanied by an increased power consumption, and hence a reduced battery life for a battery powered probe, this may be advantageous where the higher measurement resolution is only required for some of the scanning probe measurements.

In a preferred embodiment, the one or more digitisers comprise one or more amplifiers and one or more ADCs. For example, each digitiser may include one or more amplifiers and an ADC. Each digitiser may include a series of amplifiers. The electronic gain applied by each of the one or more amplifiers may be adjustable. In this manner, the amplifier gain applied to each transducer signal may be applied prior to that transducer signal being fed to the associated ADC. Increasing the amplifier gain thus increases the voltage received by the ADC for a certain magnitude of transduced deflection. The ADC will typically have a certain fixed resolution (e.g., 16-bits) and be configured to digitise a received analogue signal over a certain voltage range (e.g., 0 to 3.3 Volts). Any voltage that exceeds this range (e.g., a voltage over 3.3 Volts) will saturate the ADC. Increasing the amplifier gain will thus result in the resolution of the stylus holder deflection measurements increasing, albeit at the expense of reducing the range of stylus holder deflection measurement (i.e. measurement of stylus deflection is then only performed over a subrange or portion of the full transducable deflection range). Altering the amplified gain in this manner thus provides a simple, electronic technique that allows the digitised probe data to be generated over a selected subrange of the transducable deflection range. In other words, altering an electronic gain to the one or more transducer signals allows the subrange associated with the digitised probe data to be readily adjusted. The scanning probe may thus include a gain control unit that controls the electronic gain applied by each of the one or more amplifiers. As mentioned above, the lower boundary of the subrange may also be adjusted. This may be done by applying a voltage offset to the transducer signal(s) before it is input to ADC.

In an alternative embodiment, the reference voltage applied to each ADC could be adjusted to achieve a similar effect as varying the amplifier gain. An ADC is typically configured to compare an input voltage to a reference voltage level. For example, the 16-bits ADC mentioned above may be fed a reference voltage of, say, 3.3V relative to a common ground. The ADC would then digitise an input signal between 0V and 3.3V into the 65,536 levels. Reducing the reference voltage applied to the ADC would thus have a similar effect to increasing the gain applied to the input signal. In other words, the subrange of the digitised probe data could also be adjusted by altering the ADC reference voltage.

The subrange over which the digitised probe data is generated could also be altered in a variety of alternative ways. For example, the scanning probe could include a mechanical adjustment for setting the subrange (e.g. by changing a spring rate, amount of mechanical damping or transducer location). It would also be possible to apply an electronic adjustment to each transducer. For example, it would be possible to alter the voltage used to excite a senor (e.g., a strain gauge) to increase or decrease the sensitivity of its transducer signal output. Similarly, the intensity of light output by a transmitter in an optical transducer could be increased to increase the sensitivity to stylus holder deflection. The sensitivity of the one or more transducers is thus advantageously adjustable.

It should be noted that the measurement resolution of the scanning probe is also affected by the length of the attached stylus. The tip of a longer stylus needs to be moved further than the tip of a short stylus to cause the same amount of deflection of the stylus holder. It is therefore important to note that altering the subrange means altering the amount of stylus holder deflection over which the digitised probe data is generated. This will, for a given length of stylus, also alter the range of stylus tip displacement (i.e., the effective measurement range of the scanning probe with an attached stylus).

As explained above, the scanning probe may be configured to allow a user to define the upper and lower boundaries of the subrange. This may allow a user to tailor the subrange to the particular measurement being performed. The subrange may thus be defined each time a different measurement is to be performed. Alternatively, the probe may be operable in a plurality of different modes. These modes may be preset during probe manufacture; for example, to provide optimised operation for form or surface finish measurements. Alternatively, the different modes may be set by a user or installer of the scanning probe. For example, modes could be stored in the probe that include subranges having upper and/or lower boundaries that are set as described above.

Advantageously, the scanning probe is operable in at least a first mode and a second mode. Conveniently, the first mode generates digitised probe data over a first subrange of the transducable deflection range. Preferably, the second mode generates digitised probe data over a second range of the transducable deflection range that is different to the first subrange. The second range of the transducable deflection range may be a second subrange. Alternatively, the second range of the transducable deflection range may be the full transducable deflection range. The first mode may be optimised for one type of measurement (e.g., surface finish measurements) and the second mode may be optimised for a different type of measurement (e.g., form measurements). It would, of course, be possible for the scanning probe to be switchable between further (e.g., third, fourth, fifth etc) modes that each define different subranges. Operating the scanning probe in a touch trigger mode would also be possible, i.e., where a trigger signal is issued when a deflection threshold is crossed (i.e., rather than generating and outputting digitised probe data). The scanning probe may be switchable between the first mode and the second mode (and any further modes). In other words, the scanning probe may operate in only one mode at a time. Alternatively, the scanning probe may be operable in a plurality of such modes at the same time (i.e. simultaneously). The digitised probe data may then comprise two sets of stylus holder deflection measurement taken over different ranges of stylus holder deflection.

The scanning probe may be a multi-directional scanning probe. A stylus attached to the stylus holder of such a scanning probe may be deflectable relative to the housing of the scanning probe in any of two mutually perpendicular directions, or in any of three mutually perpendicular directions. The scanning probe may include a suitable number and arrangement of transducers to measure stylus deflection in some, or all, of the deflection directions. The one or more transducers may advantageously comprise a plurality of transducers and the digitised probe data may describe the magnitude and direction of stylus holder deflection. A multi-directional scanning probe may thus be provided that allows stylus deflection to be measured in multiple directions. The multi-directional scanning probe may be a two-dimensional scanning probe that measures stylus deflections in two dimensions (e.g., in an x-y plane perpendicular to the longitudinal axis of the probe). The multi-directional scanning probe may be a three-dimensional scanning probe that measures stylus deflections in three dimensions (e.g., that measures stylus deflections in the x-y plane perpendicular to the longitudinal axis of the probe and in the z-direction that is parallel to the longitudinal axis of the probe). Alternatively, the scanning probe may include a deflection sensor that can only measure the magnitude (not direction) of stylus deflection. For example, the scanning probe may comprise a multidirectional, single output scanning probe that generates probe data describing only the magnitude of stylus deflection.

As explained above, the scanning probe is configurable to generate digitised probe data for a subrange of the transducable deflection range. The digitised probe data thus includes stylus holder deflection data. The subrange may define a minimum and/or a maximum stylus holder deflection for the digitised probe data. For example, the subrange may define a magnitude of stylus holder deflection in any direction up to a maximum deflection and/or from a minimum deflection. Alternatively, the subrange of the digitised probe data may be direction dependent. For example, the subrange may be different in different directions (e.g., the maximum and/or minimum deflections in the z-direction may be different to those in the x or y directions). The one or more transducer signals produced by the one or more transducers are used to generate the digitised probe data and as explained above in one embodiment the subrange may be set by only digitising a part of the transducer output range. If the scanning probe includes a plurality of transducers, the same part of the range of each transducer may be digitised. Alternatively, different parts of each transducer range may be digitised. For example, the gain and/or offset applied to the transducer signals before they are digitised may be set separately for each transducer. For simplicity, it is preferred that the same gain and/or offset is applied to all transducers.

The scanning probe may include any type of transducer that can measure the deflection of the stylus holder. The one or more transducers may be located within the probe body. If more than one transducer is provided, all the transducers could be of the same type. Alternatively, a plurality of different transducer types could be provided. The transducers could comprise a capacitive transducer. The transducers could comprise an inductive transducer. The transducers could comprise a magnetic transducer (e.g., a Hall effect sensor). The transducers could comprise a piezo-electric transducer. The transducers could comprise an optical transducer. The optical transducer could comprise an optical position encoder. The optical transducer could comprise a light barrier arrangement. Advantageously, the one or more transducers comprise one or more strain gauges. For example, three strain gauges could be provided on a strain sensing support structure. In a preferred embodiment, the scanning probe could comprise a strain gauge scanning probe arrangement as described in WO2023/036887.

Advantageously, the scanning probe is a machine tool scanning probe. In other words, the scanning probe may be configured for a machine tool (i.e., adapted for use in a machine tool environment). The scanning probe may be hardwired to an interface unit. Providing such a hardwired link is convenient when installing the scanning probe on fixed parts of a machine tool, for example on grinding machines or the like. The one or more digitisers may be provided within the probe body. Alternatively, the one or more digitisers may be provided within the interface unit. Conveniently, the scanning probe is a battery powered scanning probe. In this manner, there is no need for any power cables. Such a battery powered probe may communicate with an interface over a wireless link. Such a wireless scanning probe may be suitable for mounting in the spindle of a machine tool. For example, the scanning probe may be attachable, or attached, to a shank that can be held in the spindle of a machine tool. The machine tool scanning probe may also be resistant to liquid (coolant) or the like. The scanning probe may comprise a wireless communications unit for wirelessly transmitting the digitised probe data to a remote interface unit. The wireless communications unit may be configured for radiofrequency (RF) communication. The wireless communications unit may be configured for optical (e.g., infra-red) communication. In this manner, the digitised probe data can be passed to a remote interface unit (e.g., with a receiver mounted inside the machine tool) removing the need for any hardwired connection to the scanning probe. The remote interface unit may, in turn, be connected to the controller of the machine tool.

A kit of parts may also be provided that includes the scanning probe described above. The kit may also include a surface finish stylus. For example, a surface roughness stylus may be included. The surface finish stylus may comprise a stylus of the type described in US2016/0231108, WO2019/207293 or WO2019/207294. The kit may also include a form measurement stylus. For example, a ruby or diamond ball may be provided on an elongate stylus shaft. The kit may include a stylus assembly comprising a form measurement stylus and a surface finish stylus. For example, a so-called star stylus assembly may be provided that incorporates a form measurement stylus and a surface finish stylus. The kit may also include a probe interface for communication with the scanning probe. The kit may also include a machine tool shank. The kit may also include a machine tool.

The present invention also extends to a method of using the above-described scanning probe for measuring an object. The method may include the steps of attaching a form measurement stylus to the scanning probe and measuring the form of an object. The scanning probe may generate data over the whole transducable deflection range for such form measurements. The method may include the steps of attaching a surface finish measurement stylus to the scanning probe and measuring the surface finish of an object. The scanning probe may generate data over a first subrange of the transducable deflection range for such surface finish measurements. The surface finish stylus may be configured to measure surface waviness. The surface finish stylus may be configured to measure surface roughness. Surface roughness and surface waviness are both examples of surface finish. For surface roughness, the measured variation in surface texture may be used to generate an "Ra" (arithmetic mean height) surface roughness value. It would, of course, also be possible to measure other surface finish parameters. For example, arithmetic mean waviness (Wa), the total profile height (Wt), mean roughness depth (Rz), mean peak width (Rsm) etc.

According to a second aspect of the present invention, there is also provided a method of configuring a scanning probe having a probe body and a deflectable stylus, the scanning probe outputting probe data describing deflection of the stylus. The method comprises the steps of (i) setting an upper deflection boundary by defining a maximum stylus deflection to be used during measurement, and (ii) configuring the scanning probe to only output probe data that describes deflection of the stylus up to the upper stylus deflection boundary of step (i). In other words, the maximum stylus deflection defined in step (i) is used to set the upper end of a stylus deflection subrange over which probe data describing stylus deflection is generated. Step (i) may comprise using a stored, a previously measured or a calculated maximum stylus deflection value.

Advantageously, step (i) comprises setting the upper stylus deflection boundary by deflecting the stylus to a maximum stylus deflection to be used during measurement. It should be noted that the upper stylus deflection boundary may be higher than the maximum stylus deflection to provide some headroom. The method may also include the additional steps of (iii) setting a lower stylus deflection boundary by defining a minimum stylus deflection to be used during measurement. Step (iii) may comprise using a stored, a previously measured or a calculated minimum stylus deflection value. Advantageously, step (iii) may comprise deflecting the stylus to a minimum stylus deflection to be used during measurement. A step (iv) may be performed of configuring the scanning probe to only output probe data that describes deflection of the stylus above the lower stylus deflection boundary. It should be noted that the lower stylus deflection boundary may be lower than the minimum stylus deflection to provide some headroom. The steps (i) to (iv) may be performed in any suitable order. In this way, the lower end of a stylus deflection subrange may also be set. This may be implemented using a scanning probe according to the first aspect of the present invention. As explained above, limiting the deflection range over which probe data is generated can allow the measurement resolution to be increased within that limited deflection range. The scanning probe can thus be optimised for taking different types of measurements where stylus deflection occurs over different deflection ranges.

Advantageously, the deflectable stylus comprises a surface finish stylus (e.g., releasably attached to a stylus holder of the scanning probe) and the method may include a step of using the scanning probe to measure the surface finish of an object. For example, the surface roughness of a surface of the object may be measured using a surface roughness stylus. As explained above, the variation in stylus deflection that occurs during a surface finish measurement may be significantly lower than the mechanical or transducable deflection range of the scanning probe. For example, deflection may occur over 50-100µm of a 1-2mm transducable deflection range of the scanning probe. Setting the maximum stylus deflection in step (ii) and optionally the minimum stylus deflection of step (iv) allows the collected probe data to be spread over the subrange (e.g., the 50-100µm of expected deflection) of the full (e.g., 1-2mm) mechanical range of the scanning probe. This allows, for example, the measurement resolution within the subrange to be increased without the need to increase the resolution of the ADCs being used to digitise transducer signals.

Also described herein is a scanning probe for a coordinate positioning apparatus, comprising; a probe body, a stylus holder for holding a stylus, the stylus holder being deflectable relative to the probe body, one or more transducers for producing one or more transducer signals indicative of stylus holder deflection, each of the one or more transducers being able to produce a transducer signal having a voltage within a voltage range, one or more digitisers for digitising the one or more transducer signals to generate probe data describing stylus holder deflection, wherein the one or more digitisers are configurable to digitise the one or more transducer signal over only a part of the voltage range.

Also described herein is a scanning probe for a coordinate positioning apparatus, the scanning probe comprising a probe body, one or more sensors for generating one or more sensor signals indicative of the position of the probe body relative to a surface, the one or more sensor being configurable to measure the position of the probe body relative to a surface within a sensor range, and one or more digitisers for digitising the one or more sensor signals and generating therefrom digitised probe data that describes the position of the probe body relative to the surface, wherein the scanning probe is configurable to generate the digitised probe data for a subrange of the sensor range. The scanning probe may comprise a non-contact probe. The one or more sensors may comprise one or more non-contact sensors. The non-contact sensor(s) may comprise an optical sensor. Alternatively, the scanning probe may comprise a contact probe having a stylus holder for holding a stylus, the stylus holder being deflectable relative to the probe body within a transducable deflection range. The one or more sensors may comprise one or more transducers for producing one or more transducer signals indicative of the stylus holder deflection.

Also described herein is a scanning probe. The scanning probe may be for a coordinate positioning apparatus. The scanning probe may comprise a probe body. The scanning probe may comprise a stylus holder. The stylus holder may be suitable for holding a stylus. The stylus holder may be deflectable relative to the probe body. The scanning probe may comprise one or more transducers. The one or more transducers may allow measurement of stylus holder deflection relative to the probe body over a transducable deflection range. The one or more transducers may produce one or more transducer signals. The transducer signals may be indicative of the stylus holder deflection. The scanning probe may comprise one or more digitisers. The one or more digitisers may be for digitising the one or more transducer signals. The one or more digitisers may generate digitised probe data from the one or more transducer signals. The digitised probe data may describe stylus holder deflection. The scanning probe may be configurable to generate the digitised probe data for a subrange of the transducable deflection range. The scanning probe may include any one or more of the features described above.

The invention will now be described, by way of example only, with reference to the accompanying drawings in which:
Figure 1 is a schematic illustration of a scanning probe mounted on a machine tool,
Figure 2 illustrates a surface finish stylus that can be attached to the stylus holder of the scanning probe shown in figure 1,
Figure 3 shows a scanning probe with the stylus in an undeflected state,
Figure 4 shows a scanning probe with the stylus deflected to the maximum extent expected during a measurement,
Figure 5 show the effect of adjusting amplifier gain on the signal input to the ADC,
Figure 6 illustrates a circuit for adjusting the gain applied to a transducer signal, and
Figures 7a and 7b show the maximum output when minimum deflection is set with the stylus in free space or at nominal deflection respectively, and
Figure 8 is a flow chart illustrating a process of the present invention for setting the upper stylus deflection boundary.

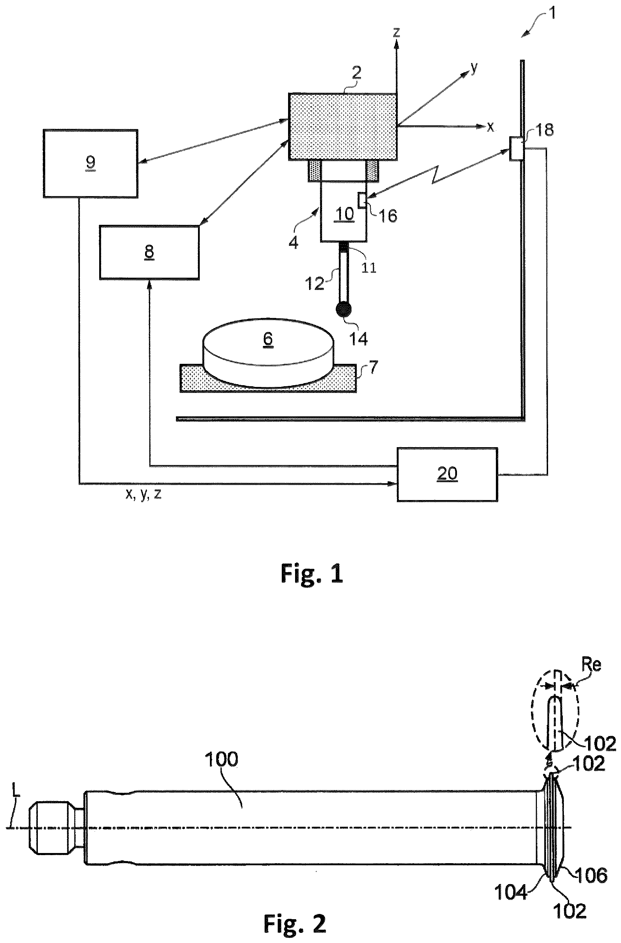

Referring to figure 1, there is illustrated a machine tool 1 having a spindle 2 holding a scanning probe 4.

The machine tool 1 includes various motors 8 for moving the spindle 2 relative to a workpiece 6 located on a workpiece holder 7 within the work area of the machine tool. The location of the spindle within the work area of the machine is accurately measured in a known manner using encoders 9 that provide "machine position data" in the machine coordinate system (x,y,z). A numerical controller (NC) 20 of the machine tool controls (x,y,z) movement of the spindle 2 within the work area of the machine tool and also receives information (i.e. machine position data) from the various encoders 9 describing the spindle position. The term numerical controller as used herein should also be understood to mean any part of the numerical control system of the machine tool, for example it could include a programmable logic controller (PLC) and drive controllers etc.

The scanning probe 4 comprises a probe body 10 that is attached to the spindle 2 of the machine tool using a standard releasable shank connector. The scanning probe 4 also comprises a deflectable stylus holder 11 to which a workpiece contacting stylus 12 is attached. The stylus 12 thus protrudes from the probe body 10. The stylus shown in figure 1 is a form measurement stylus that has a ruby stylus ball 14 at its distal end for contacting the associated workpiece 6. The scanning probe 4 generates digitised probe data that describes deflection of the stylus 12 in a local probe coordinate system. For example, a stream of (a,b,c) stylus deflection values may be generated. The scanning probe 4 includes, in this embodiment, a strain gauge transducer arrangement of the type described in WO2023/036887.

The scanning probe 4 also comprises a wireless transmitter/receiver portion 16 for passing the probe data to a corresponding wireless receiver/transmitter portion of a probe interface 18. The wireless link may be, for example, RF or optical. In this embodiment, a radio communications link is provided. For other machine tool configurations, a hard-wired probe could also be used. The NC 20 receives the machine position data (x,y,z) from the encoders 9 and the probe data (a,b,c) from the probe interface 18. The probe data may then be appropriately analysed. For example, for form measurements of the object the machine position data and the probe data may be combined to determine the position of multiple points on the surface of the workpiece 6.

In addition to taking form measurements using the stylus 12, it is also possible to attach different styli to the scanning probe to measure other properties of the object or workpiece 6. For example, the use of a smaller tip to contact the object allows finer details about the surface to be measured. Styli may thus be attached to the stylus holder 11 to measure the arithmetic mean roughness (Ra), the arithmetic mean waviness (Wa), mean roughness depth (Rz), the mean peak width (Rsm), the total profile height (Wt) etc. Due to the very specific nature of the different measurement tasks, it is necessary to have a specific stylus for each application for reasons of contact pressure, access, and performance. Such measurements are typically called surface finish or surface condition measurements, as opposed to form measurements which describe the general shape (form) of the object.

Figure 2 illustrates a surface finish stylus as described in WO2019/207294 that would be suitable for attachment to the stylus holder 11 of the scanning probe described above with reference to figure 1. The stylus includes an elongate stylus shaft 100 that has a disk 102 sandwiched between a pair of clamping members 104 and 106. The edge of the disk 102 has an effective radius Rₑ, as shown in the inset to figure 2. In particular, the disk 102 has a thickness of 100µm with the peripheral edge having an effective radius Rₑ of 25µm. This stylus allows surface roughness to be measured, as described in WO2019/207294.

Although surface measurements using a scanning probe are described in WO2019/207294, the skilled person would have appreciated that the nature of the stylus will have an impact on the performance of the system because the transducer is not located at the stylus tip. Put simply, the further the stylus tip is separated from the transducer, the lower the precision of the measurement because the signal to noise ratio of the transducer will be significantly reduced. In certain applications, such as surface roughness (Ra) measurements, it has been appreciated by the present inventors that a greater sensitivity over a reduced measurement range is advantageous. However, a form scanning application may still require a larger measurement range at a coarser resolution. Typically, the end user of a scanning probe will want to be free to select any suitable stylus for the particular measurement task they are undertaking. To date, scanning probes have thus been produced which measure stylus deflection over the whole usable (transducable) deflection range to allow the use of any stylus. The present inventors have, however, appreciated that this is not optimum for styli where a large part of the transduced output range is unused and hence measurement performance is compromised.

The scanning probe 10 thus includes an adjustable (variable) gain setting. In other words, the gain that is applied to the transducer signals generated by the strain gauge transducers can be adjusted by a user. This allows the transducer signals to be digitised over only a selected part of their output range. The scanning probe can then produce digitised probe data over a user-selectable subrange of its transducable deflection range. The resolution of the ADCs that digitise the amplified transducer signals remain unchanged, but the measurement resolution of the scanning probe is increased (i.e., the digitised levels will be concentrated within a subrange). This subrange can then be set specifically for the stylus that is attached to the scanning probe. For example, a small subrange could be used for surface roughness styli whereas a larger subrange (or the entire transducable range) could be used for form measurement styli.

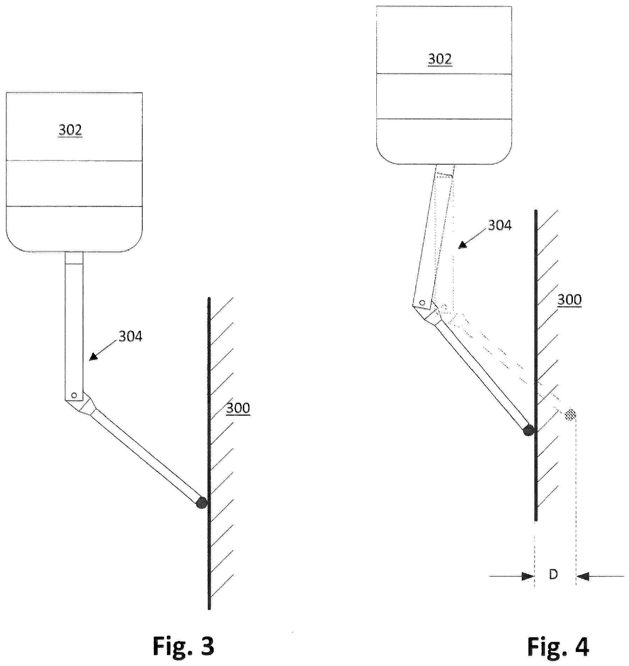

Referring next to figure 3 to 7, a method will be described for setting the required subrange. In particular, a process will now be described in which the user deflects the required stylus by the maximum amount to be transduced and the scanning probe tunes its gain such that the system is on the limit of output at the maximum required deflection using the required stylus.

In a first step of the method, illustrated in figure 3, the position is found of a surface 300 to be scanned by a scanning probe 302 to which an angled stylus 304 is attached. This can be done by using the scanning probe 302 in a touch trigger mode, which allows the probe to be calibrated for scanning using the particular stylus that has been fitted by the user, to account for pretravel. Multiple touch trigger points are preferably taken to ensure that the correct toolpath can be calculated for the appropriate measurement. It is understood that the touch trigger lobing performance can also be affected by different stylus combinations, but repeatability would be unaffected and so for prismatic measurements this would still be perfectly acceptable. Although the illustrated stylus 304 includes a spherical tip, it should be noted that any suitable stylus tip could be provided.

A second step of the method comprises autozeroing (nulling) the scanning probe in its undeflected position, as shown in figure 3. This ensures the probe data generated by the scanning probe indicates zero stylus deflection when the stylus is not in contact with an object. The stylus is then deflected by the maximum amount that is required for the measurement that is to be undertaken, as shown in figure 4 (noting the magnitude of deflection is greatly exaggerated for illustration purposes). If an "Ra" surface roughness measurement is being taken with a surface roughness stylus, then a deflection of 50µm may be the maximum required deflection (i.e., the upper end of the required subrange) for that measurement. However, a surface waviness stylus (e.g., for taking a "Wa" measurement) may require a maximum deflection of 100µm. If form measurements are being taken, the maximum deflection may be 500µm. The deflection obviously can't exceed the transduced deflection range of the mechanical system, and the stylus deflection used during this step should ideally be in the intended direction of stylus deflection during measurement, especially if the scanning probe is anisotropic in its response.

A third step of the method involves informing the scanning probe that the maximum deflection has been reached. This can be done in a variety of ways. In the present embodiment, the scanning probe is configured to receive a start command from the controller of the machine tool, via the probe interface, that causes it to enter a trimming (configuration) mode. When in the trimming mode, the maximum stylus deflection is recorded and on receipt of a finish command from the controller, or after a preset amount of time, the trimming process is performed by the scanning probe to set an amplifier gain in which the upper limit on measured stylus deflection corresponds to the recorded maximum stylus deflection. It should be noted that some additional "headroom" may be provided when setting the amplifier gain to ensure the maximum stylus deflection can be measured even in the presence of noise etc. The trimming mode thus allows the upper boundary of a deflection subrange to be set. The maximum transduced deflection of the scanning probe is thus set as appropriate for the measurement process that is to be performed. The result is that the full dynamic range of the transducers and electronics can be utilised even though the stylus is only being deflected over a part (i.e., a subrange) of the transducable deflection range of the scanning probe.

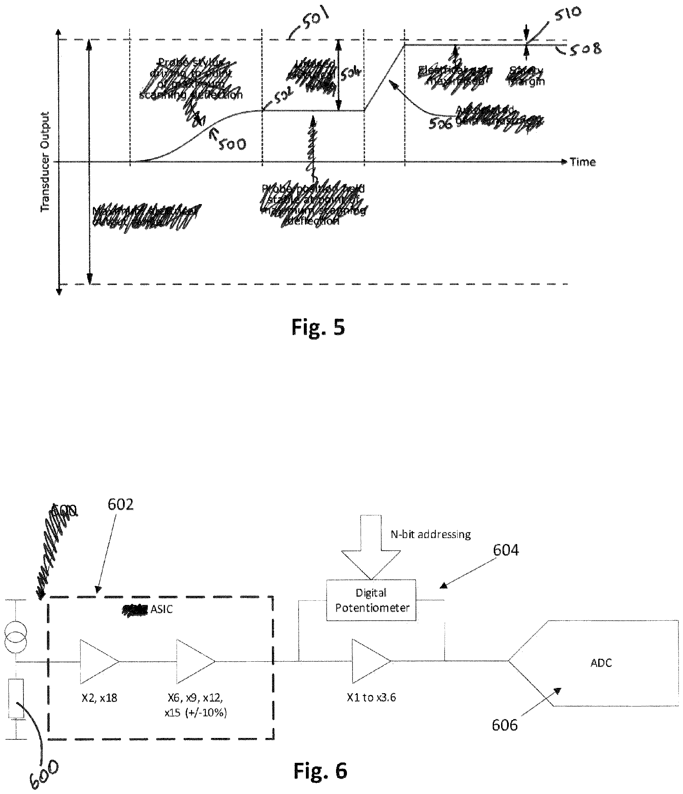

Figures 5 illustrates how the trimming mode may be implemented. In particular, it is shown how the amplified transducer output varies with time as the stylus of the scanning probe is moved into contact with the surface. Initially, the stylus is not in contact with the surface and hence the transducer output is zero. At this point, the gain is set to a low or minimum value. The stylus is then driven into contact with the surface, resulting in a gradual increase 500 in transducer output. The probe motion is stopped at time 502 after the stylus has reached the maximum scanning deflection and the amplified transducer output is seen to level-off well below the maximum electrical range 501. There is thus unused electrical range 504, so a gain adjustment is performed without any further motion of the probe (i.e., with the stylus held at the maximum scanning deflection). In particular, the gain is increased thereby causing an increase 506 in the amplified transducer output. The increased gain that is applied is selected so that the amplified transducer output 508 is just below the maximum electrical output range 501. In other words, a small safety margin 510 is included to ensure that the maximum stylus deflection can be transduced even in the presence of electrical noise etc (i.e., some headroom is provided).

An optional fourth step can then be performed to calibrate the measurement system with the gain set by the trimming process of the third step. Since the gain of the scanning probe system will change dependent on the stylus and application, the calibration of sensitivity and linearity of the probe in relation to machine position is preferably performed once the gain calibration process mentioned above has been completed. A variety of linearity and sensitivity calibration procedures are well known to those skilled in the art and are typically performed when installing or changing a scanning probe configuration. It is therefore preferable that such standard calibration procedures are performed over the subrange of the stylus deflection that has been set during the trimming process. It would also be possible to combine the trimming and the sensitivity/gain calibration processes based on a maximum user specified stylus deflection.

Referring next to figure 6, the implementation of the gain adjustment electronics included in the scanning probe 10 is schematically illustrated. The voltage from a strain gauge transducer element 600 is fed to the ASIC 602 that applies a front-end gain. The front-end gain is selectable via eight discrete values in the ASIC. The discrete gain levels and gain increments of the ASIC 602 are shown in table 1. The output of the ASIC 602 is fed to a variable gain amplifier 604 that can apply a gain of up to 3.6 times. In this example, the variable gain amplifier comprises an op-amp with selectable resistive feedback to adjust the gain. For example, the resistive feedback can include a digital potentiometer which would provide gain increments suitable for trimming the required gain to the correct resolution. An amplification chain comprising a plurality of amplifiers (i.e., the ASIC 602 and the variable gain amplifier 604) is thus provided for the transducer signal prior to digitisation) by the ADC 606 to produce the digitised probe data. This amplification chain combines the discrete levels of the ASIC 602 and the variable gain of the variable gain amplifier 604 to provide a continuous gain variation that covers the expected range of applications and styli combinations. It should, of course, be remembered that this is just one potential embodiment and there are many ways in which the overall system gain can be adjusted, both mechanically and electronically.

**Table 1: Discrete gain values and gain increment for the ASIC 602.**

| Discrete Gain Levels | Gain increment |
|---|---|
| X12 | |
| X18 | x1.5 |
| X24 | x1.33 |
| X30 | x1.25 |
| X108 | x3.6 |
| X162 | X1.5 |
| X216 | X1.33 |
| X270 | X1.25 |

The circuit shown in figure 6 could be used to implement the trimming process in a variety of ways. For example, the gain calibration process could comprise performing a successive approximation routine using the combination of the gain settings of the ASIC 602 and the addressing of the digital potentiometer 604. This means that each bit is set in turn and the output of the amplifier is measured to see if the output is at the required output level. As the increments of gain become smaller and smaller the system should converge to a gain that is best for the application and stylus combination of the scanning probe. Other approaches for adjusting the gain could be used.

It should be noted that the adjustment of the scanning probe in terms of gain and then sensitivity and linearity could be combined into a single cycle, with the user specifying the maximum deflection that is required for the specific measurement. Preferably, this is performed each time the stylus is changed.

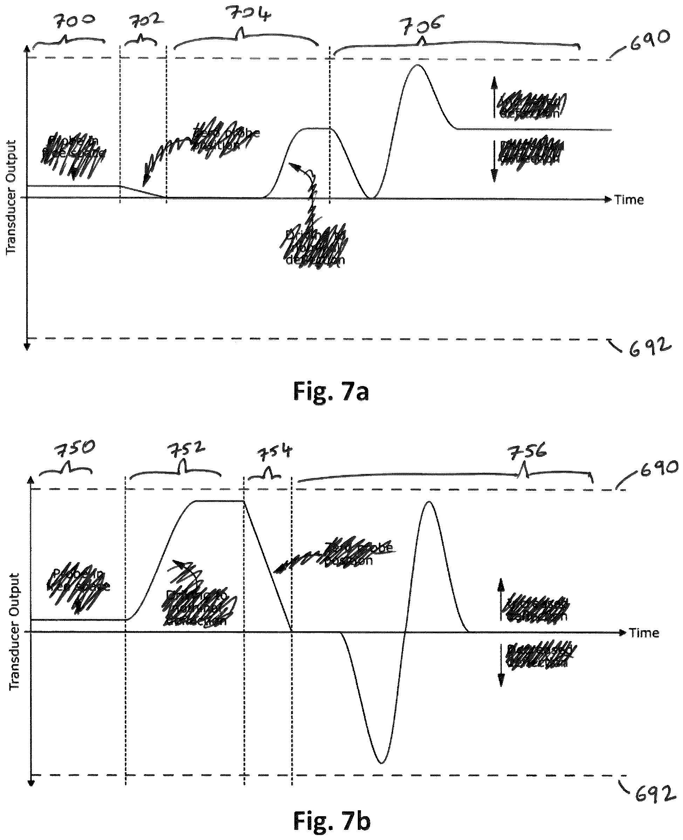

Referring to figures 7a and 7b, further options for the trimming process will be described.

Figure 7a shows the amplified transducer output as a function of time when measuring a surface using a surface roughness stylus and a scanning probe that has been trimmed using the process described above (although a similar process could be used for any stylus). The upper limit 690 and lower limit 692 of the amplified transducer output are also shown. In time window 700, the stylus is in free space. An autozeroing process is performed in the time window 702, still without the stylus touching the object, which causes the transducer output to be set to zero. The stylus of the probe is driven into the surface of the object to its nominal deflection in time period 704, resulting in an increase in the transducer output to the illustrated plateau. For such nominal deflection, the transducer output sits approximately at a mid-point in the upper (positive) half of the transducer output range. Any deflections away from nominal (i.e., due to the variations in surface roughness), will thus occur only in the upper (positive) half of the electronic range. Such deflections are shown in time period 706.

It has been found that when measuring surfaces where a differential result is required (such as surface roughness), a doubling of the dynamic range of the system can be achieved by implementing a nulling (autozero) process when the stylus of the probe is held at the nominal deflection to be used for the measurement. For example, if a surface roughness measurement was expected to provide a stylus deflection of between 0 and 100µm then the autozeroing process could be performed with the stylus deflected by 50µm (i.e., at a mid-point or nominal stylus deflection).

Referring to figure 7b, the probe may be trimmed (using the process described above) and the applied gain doubled. In time window 750, the stylus is in free space. Driving the stylus to its nominal deflection in time window 752 produces a transducer output that is just below the maximum limit 690. The probe is auto-zeroed in time window 754 by applying an appropriate offset (i.e., so that the transducer output is zero when there is nominal stylus deflection). This means that the maximum stylus deflection and the minimum stylus deflection expected during a measurement fall near the upper (positive) and lower (negative) transducer output limits. Such minima and maxima in stylus deflection are illustrated in the time period 756. The result of this process is that the sensitivity of the measurement will be twice that achieved previously. The same effect could be achieved if half the maximum measurement deflection is used when the gain calibration (trimming) occurs, optionally with an auto-zeroing process performed after the gain adjustment with the stylus at half deflection.

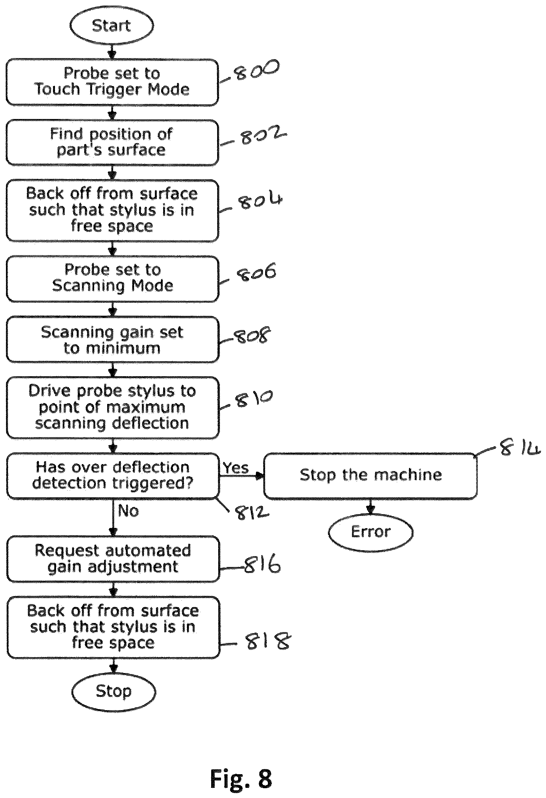

Referring to figure 8, a flow chart is provided to summarise a series of steps that could be used to set the upper boundary of the subrange for which digitised probe data is generated.

A first step 800 comprises setting the scanning probe to operate in a touch trigger mode. A second step 802 may then be performed of measuring the position of a point on the surface of an object, to obtain an accurate surface position measurement. A third step 804 comprises moving the scanning probe so that the stylus disengages (i.e., is backed-off from) the surface and is followed by a fourth step 806 of setting the scanning probe to operate in a scanning mode. In a fifth step 808, the gain applied by the amplifiers of the scanning probe is set to minimum, prior to a sixth step 810 of moving the stylus into contact with the surface and halting such motion when the stylus is deflected to the maximum deflection that would be expected during the subsequent scanning measurements. It should be noted that the position of the probe relative to the surface is known from the surface position measurement of the second step 802. Whilst the step 810 is being performed, it is checked in the seventh step 812 that there is no "over-deflection" (i.e., deflection above the maximum transduced output) with the minimum gain. If the seventh step 812 indicates over-deflection, an eighth step 814 is performed in which the machine motion is halted, and an error condition is flagged. In the absence of such an error, the ninth step 816 is performed in which the amplifier gain is adjusted (trimmed) as described above. The tenth step 818 comprises moving the stylus out of contact with the object, so the scanning probe is ready to be used for the required scanning measurements. The various steps shown in figure 8 may be provided as a set of coded instructions (e.g., as part of a "macro" code program that is run by the machine tool).

It should be remembered that the above embodiments are merely examples, and that the skilled person would appreciate the many different variants and alternatives that could be implemented in accordance with the present invention. For example, the process could be implemented using different types of contact scanning probes (e.g., having capacitive or optical transducers) or even a non-contact scanning probe. Different types of styli could also be used for different measurement purposes. Also, the above provides an example of one machine tool configuration but there are many other types of machine tool that could be used to impart the relative motion between the scanning probe and the object to be scanned. For example, the object could be held on moveable table. It would also be possible for the scanning probe to be held in a fixed position (e.g., on an arm) and for the object moved to provide the necessary relative motion.

## Claims

1. A scanning probe for a coordinate positioning apparatus, comprising;
a probe body,
a stylus holder for holding a stylus, the stylus holder being deflectable relative to the probe body,
one or more transducers for producing one or more transducer signals indicative of stylus holder deflection, the one or more transducers allowing measurement of stylus holder deflection relative to the probe body over a transducable deflection range, and
one or more digitisers for digitising the one or more transducer signals and generating therefrom digitised probe data that describes stylus holder deflection,
wherein the scanning probe is configurable to generate the digitised probe data for a subrange of the transducable deflection range.

2. A scanning probe according to any preceding claim, wherein the scanning probe is configured to enable the proportion of the transducable deflection range encompassed by the subrange to be adjusted.

3. A scanning probe according to any preceding claim, wherein the scanning probe is configured to enable an upper boundary and/or lower boundary of the subrange to be adjusted.

4. A scanning probe according to claim 3, wherein the scanning probe is operable in a configuration mode in which the upper boundary and/or the lower boundary are set after deflecting the stylus holder to a maximum and/or minimum deflection.

5. A scanning probe according to any preceding claim, wherein the scanning probe is configured to enable the measurement resolution of the digitised probe data to be adjusted.

6. A scanning probe according to any preceding claim, wherein the one or more digitisers comprise one or more amplifiers and one or more analogue-to-digital convertors (ADCs), the electronic gain applied by each of the one or more amplifiers being adjustable.

7. A scanning probe according to any preceding claim, wherein the sensitivity of the one or more transducers is adjustable.

8. A scanning probe according to any preceding claim, wherein the scanning probe is operable in at least a first mode and a second mode, the first mode generating digitised probe data over a first subrange of the transducable deflection range, and the second mode generating digitised probe data over a second range of transducable deflection range that is different to the first subrange.

9. A scanning probe according to any preceding claim, wherein the one or more transducers comprise a plurality of transducers and the digitised probe data describes the magnitude and direction of stylus holder deflection.

10. A scanning probe according to any preceding claim, wherein the one or more transducers comprise one or more strain gauges.

11. A scanning probe according to any preceding claim, wherein the scanning probe is configured for use on a machine tool and comprises a wireless communications unit for wirelessly transmitting the digitised probe data to a remote interface unit.

12. A kit, comprising a scanning probe according to any preceding claim and at least one of a surface finish stylus and a form measurement stylus.

13. A method of configuring a scanning probe having a probe body and a deflectable stylus, the scanning probe outputting probe data describing deflection of the stylus, the method comprising the steps of:
(i) setting an upper stylus deflection boundary by defining a maximum stylus deflection to be used during measurement, and
(ii) configuring the scanning probe to only output probe data that describes deflection of the stylus up to the upper stylus deflection boundary of step (i).

14. A method according to claim 13, wherein step (i) comprises setting the upper stylus deflection boundary by deflecting the stylus to a maximum stylus deflection to be used during measurement

15. A method according to claim 14, wherein the deflectable stylus comprises a surface finish stylus and the method includes a step of using the scanning probe to measure the surface finish of an object.
